# EUROPÄISCHE PATENTSCHRIFT

(11) **EP 1 693 122 B1**
(45) Veröffentlichungstag und Bekanntmachung des Hinweises auf die Patenterteilung: **14.10.2015**
(21) Anmeldenummer: 06003160.6
(22) Anmeldetag: 16.02.2006
(51) Int. Cl.: B08B 9/20, B65B 21/18

(54) **Vorrichtung und Verfahren zum Regenerieren von Flaschen**
Device and method of regenerating bottles
Dispositif et procédé de régénération de bouteilles

(30) Priorität: 16.02.2005 DE 102005007212
(43) Veröffentlichungstag der Anmeldung: 23.08.2006
(73) Patentinhaber: Krones AG, 93073 Neutraubling (DE)
(72) Erfinder: Frey, Wolfgang, 83026 Rosenheim (DE); Bauer, Stefan, 83131 Nussdorf am Inn (DE)
(74) Vertreter: Grünecker Patent- und Rechtsanwälte PartG mbB

(56) Entgegenhaltungen:
- EP-A1- 0 639 530
- DE-A1- 1 931 136
- DE-C1- 10 056 520
- DE-U1- 20 320 924
- DE-U1- 29 922 623
- FR-A- 2 444 613
- US-A- 4 778 081

## Beschreibung

Die Erfindung betrifft eine Vorrichtung und ein Verfahren zum Regenerieren von Flaschen, die einen Schraubverschluss aufweisen.

Flaschen aus elastischem Kunststoff, z.B. PET, für Getränke oder dgl., die als Leergut zurücklaufen und mit einem Schraubverschluss verschlossen sind, werden bei sinkenden Temperaturen durch den Luftdruck zusammengedrückt. Dabei verformen sich die PET-Flaschen, sodass sie in Flaschenkästen festklemmen können. Dadurch ergeben sich Probleme bei dem Herausnehmen der Flaschen aus dem Flaschenkasten.

Es ist daher bekannt, den Schraubverschluss mit einer Nadel zu durchstoßen und so Luft oder Wasser in die Flasche einzuleiten, um diese zu regenerieren, d. h. sie in ihre ursprüngliche Form zu bringen. Danach können die Flaschen mit herkömmlichen Mitteln aus dem Flaschenkasten entnommen und weiterverarbeitet werden. Ungünstig ist der zusätzliche Platzbedarf für die Regeneriereinrichtung.

Nachteilig ist zudem, dass es bei einigen Flaschen vorkommt, dass ein Dichtelement, das auf der Innenseite des Schraubverschlusses vorgesehen ist, durch die Nadel nicht durchstoßen wird, sondern vielmehr in das Innere der Flasche gedrückt wird.

Eine derartige Flasche ist für die Wiederveiwendung praktisch unbrauchbar, da das Dichtelement maschinell nur sehr schwer aus der Flasche entfernt werden kann.

Die DE 100 56 520 C2 zeigt eine Greifvorrichtung für Flaschen. Dieses Dokument offenbart eine Vorrichtung gemäß dem Oberbegriff des Anspruchs 1 und ein Verfahren gemäß dem Oberbegriff des Anspruchs 16.

Die DE 29922623 U1 zeigt eine Vorrichtung zum Behandeln von Leergutflaschen.

Die DE 1 931 136 offenbart eine Vorrichtung zum Auf- und Abschrauben von Behälterverschlüssen.

Die US 4,778,081 offenbart einen Spender für unter Druck stehende Behälter.

Die nach dem Prioritätstag veröffentlichte DE 203 20 924 U1 offenbart eine Vorrichtung zum Regenerieren von elastischen Behältern.

Die EP 0 639 530 A1 offenbart eine Vorrichtung zum maschinellen Entfernen von Schraubdeckeln von Flaschen.

Aufgabe der vorliegenden Erfindung ist es daher, eine kompakte, funktionssichere Vorrichtung anzugeben und ein Verfahren zum Regenerieren zu schaffen, mit dem eine möglichst hohe Rückgewinnungsquote von Flaschen erreicht werden kann.

Diese Aufgabe wird gelöst durch eine Vorrichtung nach Anspruch 1 und ein Verfahren nach Anspruch 16.

Vorteilhafte Ausführungsformen sind in den jeweiligen Unteransprüchen offenbart.

Erfindungsgemäß ist eine kombinierte Einrichtung zum Regenerieren und Greifen von Schraubverschlüsse aufweisenden Flaschen vorgesehen, wodurch die Einrichtung beide Arbeitsgänge - nämlich Regenerieren und Auspacken - in einem Zug bzw. unmittelbar aufeinander folgend ausführen kann. Die Bewegungsfolge - Greifen einer Flasche und Durchstoßen des Verschlusses - kann mit einfachsten Mitteln über eine stellungsabhängige Folgesteuerung der Durchstoßnadel über einen Bypass bzw. Steuerschlitz mit nur einer Druckquelle ohne zusätzliche Steuerventile für die Nadelbetätigung selbsttätig ausgelöst werden.

Damit ist diese Einrichtung für herkömmliche Packmaschinen ohne zusätzliche Sondersteuereinrichtungen oder dgl. nachrüstbar. Es genügt die für die Greiferbetätigung bereits vorhandene einfache Steuerung.

Des weiteren ist bevorzugt auch eine Verschraubeinrichtung vorgesehen, mit der lose sitzende Schraubverschlüsse auf die Flaschen aufgeschraubt werden können. Durch das Aufschrauben des Schraubverschlusses auf die Flasche wird ein eventuelles Dichtelement in dem Schraubverschluss durch Einspannen zwischen der Flaschenmündung und der Verschlussinnenseite besser fixiert. Hierbei ist es besonders vorteilhaft, wenn auch nicht zwingend nötig, dass der Schraubverschluss fest auf die Flasche aufgeschraubt ist. Auch ein noch etwas loser Schraubverschluss fixiert das Dichtelement ausreichend. Durch die Fixierung des Dichtelements ist es durch einen Dorn nicht mehr möglich, dieses Dichtelement in das Flascheninnere zu stoßen. Somit wird vorteilhafterweise die Rückgewinnungsquote von leeren PET-Flaschen erhöht.

vorteilhafterweise umfasst die Verschraubeinrichtung ein Auflageelement, das auf die Oberseite des Schraubverschlusses aufgesetzt werden kann. Dies erlaubt eine möglichst einfache Konstruktion, die bei vielen Schraubverschlusstypen eingesetzt werden kann. Das Auflageelement ist hierbei vorteilhafterweise auf bzw. mittels einer Schraubenbahn bewegbar, um das Aufschrauben eines Verschlusses auf die Flasche zu erreichen. Denkbar ist es auch, das Auflageelement in Kontakt mit dem Schraubverschluss beispielsweise durch einen eigenständigen Antrieb, beispielsweise einen Motor zu drehen und so das Aufschrauben (Anziehen) zu erreichen.

Vorteilhaft ist ein Auflageelement, das ringförmig ist, da sich so eine Öffnung für einen Dorn ergibt. Der Dorn kann dann zentral in der Vorrichtung angeordnet werden.

Vorteilhafterweise ist das Auflageelement so ausgebildet, dass es bei der Bewegung entlang der Schraubenbahn um seine Symmetrieachse rotiert. Dadurch ist eine kompakte Ausführung der Verschraubeinrichtung möglich.

Die Schraubenbahn wird vorteilhafterweise durch eine Wendelnut gegeben. Durch die Vorgabe der Schraubenbahn mit einer Wendelnut ist eine präzise und zugleich kostengünstige Ausführung der Schraubenbahn mit einfachsten mechanischen Mitteln möglich. Die Drehbewegung des Auflageelements ist damit mit geringem Aufwand von einer linearen Hubbewegung ableitbar.

Bevorzugterweise ist eine Tulpe vorgesehen, die den Greifer und/oder den Dorn und/oder die Verschraubeinrichtung umgibt. Dadurch werden die verschiedenen, vorzugsweise zueinander koaxial in der Tulpe angeordneten Teile mechanisch geschützt und gleichzeitig dient die Tulpe als Gehäuse zum Einsetzen bzw. Aufnehmen der verschiedenen Teile. Vorzugsweise ist das Auflageelement in einer Grundstellung (ohne Kontakt mit einer Flasche) am unteren Ende der umgebenen Tulpe angeordnet, oder steht ggf. über den unteren Rand der Tulpe geringfügig vor. Auf diese Art und Weise kann es bei Einsatz der Vorrichtung ohne eine größere Hubbewegung der Tulpe mit dem Schraubverschluss in Eingriff gebracht werden.

In einer Arbeitsstellung befindet sich das Auflageelement in einer axial weiter innen in der Tulpe liegenden Position, was bedeutet, dass die Tulpe über den Flaschenkopf gestülpt ist und diesen räumlich umschließt. Dies ermöglicht die gleichzeitige Anordnung bzw. Verwendung eines Greifers innerhalb der Tulpe, um die Flasche zu erfassen, beispielsweise zum Herausheben aus einem Transportbehältnis.

Das Auflageelement ist vorteilhafterweise so ausgebildet, dass es mit einer Feder oder mit einem sonstigen elastischen Element vorgespannt ist. Die Vorspannung wirkt in Richtung der Grundstellung und dient u.a. der Rückstellung aus der Arbeitsstellung. Durch den Druck der Flasche auf das Auflageelement beim Absenken der Tulpe auf den Flaschenkopf kann es jedoch in die Arbeitsstellung entlang der Schraubenbahn überführt werden, wobei sich das Auflageelement relativ zur Tulpe dreht. Durch den Druck der Flasche auf das Auflageelement und die Rotation des selben entlang der Schraubenbahn ist der Schraubverschluss auf eine Flasche aufschraubbar.

Der Greifer umfasst ein elastisches, vorzugsweise rohrartiges Element, das an den Seiten einer Flasche bzw. eines Flaschenkopfes angelegt werden kann. Das elastische Greiferelement wird mit einem axial in der Tulpe verschiebbaren Greiferkolben verformt, indem der Greiferkolben auf einen, vorzugsweise den oberen Rand des elastische Element gedrückt wird, während der zweite Rand durch die Tulpe fixiert ist. Durch eine entsprechende Lagerung des elastischen Elements verformt sich dieses durch die Stauchung radial einwärts in den Aufnahmeraum für den Flaschenkopf, so dass die Flasche durch das elastische Greiferelement gegriffen wird. Dies stellt eine möglichst einfache und zuverlässige Ausführung eines Greifers dar.

Die Verschraubeinrichtung ist vorteilhafterweise innerhalb des verschiebbaren Greiferkolbens und/oder des Greiferelements vorzugsweise koaxial angeordnet. Dadurch ist es möglich, mit ein und derselben Einrichtung gleichzeitig bzw. unmittelbar nacheinander das Verschrauben des zentral angeordneten Schraubverschlusses durchzuführen und an dem Schraubverschluss vorbei außen die Flasche zu greifen.

Zur Betätigung des Dorns ist ein Dornkolben vorgesehen, mit dem in einfacher Weise die benötigte Kraft für das Durchstoßen des Schraubverschlusses zur Verfügung gestellt wird. Hierbei ist es vorteilhaft, wenn sowohl der Greiferkolben als auch der Dornkolben in gleicher Weise betätigbar sind, wie beispielsweise pneumatisch, da dann beide Kolben vorzugsweise mit der selben Druckluft in dem selben Druckluftbereich betätigt werden können. Dies erlaubt eine kompakte und kostengünstige Konstruktion mit geringem steuerungstechnischen Aufwand.

Der Dornkolben ist hierbei innerhalb einer zentralen Öffnung des Greiferkolbens angeordnet und diesem gegenüber beweglich und abgedichtet angeordnet. Durch die Anordnung des Dornkolbens innerhalb des Greiferkolbens kann der Dornkolben auch zusammen mit dem Greiferkolben bewegt werden. Weil die Hubbewegung des Greiferkolbens jedoch relativ gering ist, ist die Bewegung des Dornkolbens durch die Bewegung des Greiferkolbens nicht weiter störend. Jedoch ermöglicht diese Anordnung eine einfache Befestigung bzw. Lagerung des Dornkolbens direkt an/in dem ihn umgebenden Greiferkolben. Eine Halterung des Dornkolbens an anderen, separaten Elementen ist somit nicht erforderlich.

Der Greifer, der Dorn und die Verschraubeinrichtung sind vorteilhafterweise in einer gemeinsamen Tulpe angeordnet. Dadurch ergibt sich eine kompakte Ausführungsform, wobei die Tulpe die innenliegende Mechanik vollständig umgibt und vor Verschmutzung etc. schützt. In der Tulpe kann auch ein abgedichteter Druckluftbereich für die Betätigung des oder der pneumatischen Kolben vorgesehen sein, wobei die Tulpenwand auch als Teil des pneumatischen Zylinders fungieren kann. Auch dies ermöglicht eine kompakte und kostengünstige Ausführung.

Der Dorn ist so ausgestaltet, dass er bei Durchstoßen des Schraubverschlusses in diesem eine Öffnung erzeugt, durch die neben dem Dorn oder durch ihn Gas, Luft oder ein sonstiges Fluid, wie beispielsweise Wasser, in das Innere der Flasche gelangt. Dies ermöglicht das Regenerieren der Flasche. Zusätzlich kann ein Druckluftanschluss vorgesehen sein, mit dem Luft mit Druck in die Flasche eingegeben wird, sodass eine schnellere bzw. bessere Regeneration der Flaschen, auch stärker verformten, erreicht wird.

Bei dem erfindungsgemäßen verfahren kann mit einer Verschraubeinrichtung ein Schraubverschluss auf die Flasche aufgeschraubt werden. Dann wird die Flasche mit einem Greifer gegriffen und der Schraubverschluss mit einem Dorn durchstoßen. Der Dorn ermöglicht dabei einen Gaseinlass in die Flasche. Falls die elastische Flasche Unterdruck aufweist, wird sie somit durch Druckausgleich regeneriert.

In einer bevorzugten Ausführungsform des Verfahrens wird die Verschraubeinrichtung auf die Flasche zubewegt, sodass ein Auflageelement auf den Schraubverschluss reibschlüssig aufsetzt. Nach dem Aufsetzen des Auflageelements erfolgt eine weitere Zustellbewegung, wodurch die Flasche eine axial gerichtete Kraft auf das Auflageelement ausübt, das somit durch eine Axialverschiebung entlang einer Schraubenbahn geführt wird und sich dabei gleichzeitig um die Flaschenachse dreht. Durch den reibschlüssigen Kontakt zwischen dem Auflageelement und dem Schraubverschluss und der Rotation des Auflageelements entlang der Schraubenbahn wird der Schraubverschluss auf die Flasche geschraubt. Dies ermöglicht ein zuverlässiges und mechanisch einfach ausführbares Festdrehen des Schraubverschlusses auf die Flaschenmündung.

Die Schraubenbahn ist der Einfachheit halber durch eine Wendelnut (Steilgewinde) vorgegeben, in der ein entsprechend geformter Zapfen des Auflageelements entlanglaufen kann. Es können auch mehrere Wendelnuten zur Vorgabe der Schraubenbahn vorgesehen sein. Beim Aufschrauben wird der Schraubverschluss vorteilhafterweise mindestens eine, eineinviertel, eineinhalb oder mindestens zwei Umdrehungen aufgedreht, d.h. im Uhrzeigersinn bewegt. Dadurch wird sichergestellt, dass auch ein nur lose aufgesetzter Schraubverschluss soweit aufgeschraubt wird, dass ein Dichtelement in dem Schraubverschluss genügend fixiert wird, insbesondere in axialer Richtung.

Zum Greifen der Flasche wird ein seitlich neben dem Flaschenkopf positioniertes elastisches Element verformt, um so den Flaschenkopf zu greifen. Dies erlaubt das Greifen von verschiedensten Flaschentypen in zuverlässiger Weise. Zur Verformung des elastischen Elements ist ein Kolben, wie etwa ein pneumatischer Kolben vorgesehen, der mechanisch einfach zu konstruieren ist. Die Rückstellung des Kolbens erfolgt durch das elastische Element.

Auch der Dorn wird durch einen Kolben, wie etwa einen pneumatischen Kolben betätigt, wobei der Kolben des Dorns und der des elastischen Elements mit dem selben Druckbereich betätigt werden können. Dies erlaubt eine besonders kompakte und kostengünstige Ausführungsform.

Eine Ausführungsform der Vorrichtung und des Verfahrens soll anhand der beiliegenden Figuren erläutert werden. Dabei zeigt:
- Figur 1: Eine schematische Schnittzeichnung einer Vorrichtung zum Regenerieren von Flaschen,
- Figur 2: schematische Schnittzeichnungen von verschiedenen Dornen,
- Figur 3: die Vorrichtung aus Figur 1 in verschiedenen Verfahrenszuständen und
- Figur 4: eine schematische Schnittzeichnung der erfindungsgemäßen Ausführungsform einer Vorrichtung zum Regenerieren von Flaschen in verschiedenen Verfahrenszuständen.

Die Vorrichtung zum Regenerieren von Flaschen 21 umfasst eine hohle Tulpe 2, die alle mechanischen Elemente in sich aufnimmt. Die Tulpe ist hierbei im Wesentlichen rohr- bzw. zylinderförmig ausgebildet. Am oberen Ende der Tulpe 2 ist ein Einlass für Druckluft vorgesehen und am unteren Ende eine Öffnung, durch die ein Schraubverschluss 20 einer Flasche 21 in das Innere der Tulpe 2 eintreten kann. Im Inneren der Tulpe 2 ist ein zylinderförmiges Rohrstück oder Zylinder 3 axial geführt, an dessen oberen Ende ein topfförmiges Element 5 anliegt bzw. angeordnet ist. Zwischen dem topfförmigen Element 5 und dem zylinderförmigen Rohrstück oder Zylinder 3 ist eine Dichtung 6 angeordnet, die an der Innenwand der Tulpe 2 anliegt und an dieser entlangbewegbar ist. Das topfförmige Element und das zylinderförmige Rohrstück bilden einen Kolben zum Betätigen eines Greifers.

Am unteren Ende des Zylinders 3 schließt sich ein elastisches, rohrartiges Gummielement 4 an. Das elastische Element oder Gummielement 4 stützt sich unten auf einer ringförmigen Einengung 14 der Tulpe 2 am unteren Ende der Tulpe 2 ab. Durch eine Druckbeaufschlagung des Druckbereichs 19 oberhalb des topfförmigen Elements 5 wird dieses zusammen mit der Dichtung 6 und dem Zylinder 3 in der Tulpe 2 axial gegen die Federkraft des Gummielements 4 nach unten bewegt. Dabei drückt der Zylinder 3 von oben auf den oberen Rand des Gummielements 4, sodass dieses radial einwärts in das Tulpeninnere gedrückt wird, um die Greiffunktion durch eine Verringerung des freien Öffnungsquerschnitts für den Flaschenkopf zu realisieren (siehe unten).

An dem topfförmigen Element 5 ist ferner an der Unterseite eine Hülse 9 angesetzt, die mit zwei Wendelnuten 11 versehen ist, die mit hoher Steigung entlang einer Schraubenbahn 10 a, 10 b auf der Außenseite der Hülse 9 verlaufen. An der Außenseite der Hülse 9 schließt sich an ihrem unteren Ende eine weitere koaxiale Hülse 15 an, die mit Zapfen 16 in die Wendelnuten 11 eingreift. Die Hülse 15 kann durch eine Axialverschiebung über die Hülse 9 bewegt werden, wobei sie durch Führen der Zapfen 16 entlang der Schraubenbahn, die durch die Wendelnuten 11 vorgegeben ist, in Drehung versetzt wird.

Die Wendelnuten 11 könnten alternativ auch an der Innenfläche der Hülse 15 vorgesehen sein, wobei dann die Hülse 9 an ihrer Außenseite die Zapfen aufweisen muss.

Am unteren Ende der Hülse 15 ist ein Auflageelement 17 verdrehfest angeordnet, das hier scheiben- bzw. ringförmig ausgebildet ist und in der Mitte eine Ausnehmung 18 aufweist. Die Unterseite des Auflageelements 17 kann gummiert oder in sonstiger weise so ausgestattet sein, dass sie eine hohe Haftreibung aufweist. Dies dient für einen besonders guten reibschlüssigen Kontakt mit der Oberseite 25 des Schraubverschlusses 20.

Auch ist es vorteilhaft, wenn die Unterseite des Auflageelements 17 zumindest geringfügig elastisch ist, so dass sie sich der Form des Schraubverschlusses 20 anpassen kann. Auch kann das Auflageelement so ausgestaltet sein, dass es im wesentlichen nur am Außenrand oder in der Nähe des Außenrands der Oberseite 25 des Schraubverschlusses 20 Kontakt zu dem Schraubverschluss 20 aufweist, da hier am besten ein Drehmoment auf den Schraubverschluss 20 übertragen werden kann. Dazu kann das Auflageelement beispielsweise konisch oder durch einen dünnen Ring gegeben und mit einer Verzahnung versehen sein.

Die Wendelnut 11 ist hier so ausgeführt, dass sie 1 ¼ Umdrehungen auf der Außenseite der Hülse 9 beschreibt.

Im Inneren der Hülse 9 und der Hülse 15 ist ein Dorn 12 angeordnet. Der Dorn 12 ist an seinem unteren Ende 13 spitz zulaufend geformt. Das obere Ende des Dorns 12 ist mit einem pneumatisch beaufschlagbaren Kolbenelement 8 versehen, das entlang der zylindrischen Innenseite des topfförmigen Elements 5 axial gleiten kann. Durch Beaufschlagen des Kolbenelements 8 mit Druckluft in dem Druckbereich 19 wird es gegenüber dem topfförmigen Element 5 nach unten bewegt. Bei entsprechender Anordnung eines Schraubverschlusses 20 kann es so den Schraubverschluss 20 durchstoßen.

Am oberen Ende des topfförmigen Elements 5 und oberhalb des Kolbenelements 8 kann auch eine Trennwand mit einem Ventil angeordnet sein, das bei einem bestimmten Druck im Druckbereich 19 den Druck auf die Oberseite des pneumatischen Kolbenelements 8 weitergibt. Dadurch ist es möglich, die Bewegung des Dorns 12 zeitversetzt nach der Bewegung des Greifzylinders 3 bei Beaufschlagen des Druckbereichs 19 mit Druckluft zu erreichen. Das Kolbenelement 8 ist mit einer Dichtung 7 gegenüber dem Inneren des topfförmigen Elements 5 abgedichtet.

Auch durch entsprechende Stärken von nicht dargestellten Federn, die den Zylinder 3 und das Kolbenelement 8 vorspannen, oder sonstige Mittel kann erreicht werden, dass sich bei Druckerhöhung im Bereich 19 erst der Zylinder 3 nach unten bewegt und dann später der Dorn 12, so dass erst ein Greifen und dann ein Durchstoßen erfolgt.

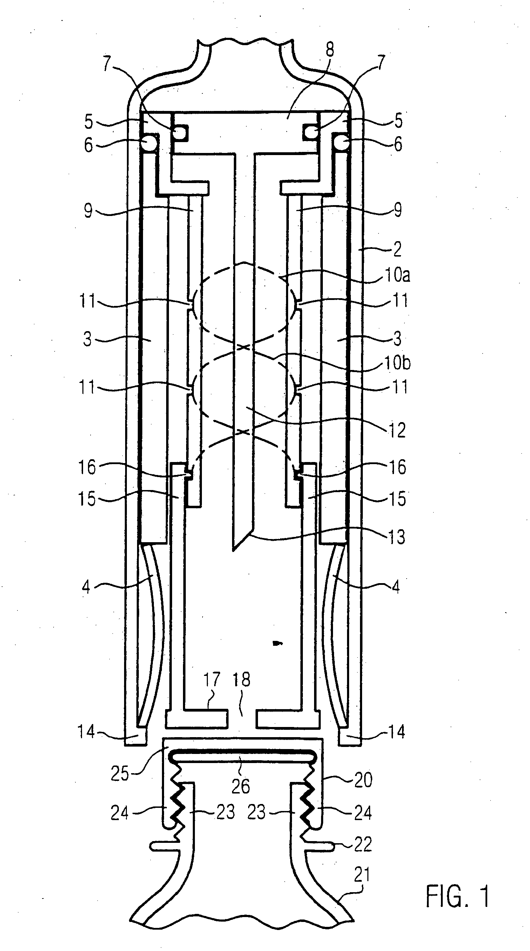

Im unteren Bereich von Figur 1 ist eine Flasche 21 dargestellt. Die Flaschen 21 weisen üblicherweise einen Tragring 22 auf, oberhalb dessen ein Gewinde 23 vorgesehen ist. Auf dem Gewinde 23 ist ein Schraubverschluss 20 lose aufgesetzt, der mit seinem Innengewinde 24 nur teilweise auf das Gewinde 23 der Flasche 21 aufgeschraubt ist. An der Innenseite des Schraubverschlusses 20 ist ein scheibenförmiges elastisches Dichtelement 26 angeordnet.

In Figur 1 sind etwaige Federelemente, die beispielsweise die Hülse 15 axial nach unten vorspannen können, der Übersichtlichkeit halber nicht dargestellt. Eine derartige Feder kann beispielsweise zwischen der Hülse 15 und dem Zylinder 3 vorgesehen sein und sich zwischen dem topfförmigen Element 5 und einem vorspringenden Rand des Auflageelements 17 auf der Außenseite des Hülse 15 erstrecken. Mit einer derartigen Feder wird die Hülse 15 in Richtung der Position wie sie in Figur 1 dargestellt ist, vorgespannt. Auch kann die Feder innerhalb der Hülse 15 vorgesehen sein und sich zwischen dem unteren Ende der Hülse 9 und dem Auflageelement 17 erstrecken.

Das Kolbenelement 8 kann auch mit einer Feder gegen das topfförmige Element 5 in Richtung nach oben vorgespannt sein.

Der Zylinder 3 wird durch die elastischen Elemente oder Gummielemente 4 nach oben hin vorgespannt. Jedoch können auch hier zusätzliche Federn vorgesehen sein. Für die Bewegung des Zylinders 3 nach unten kann auch ein Anschlag an der Innenseite der Tulpenwand vorgesehen sein. Dieser verhindert ein Herausschieben des elastischen Elements aus der Tulpe 2.

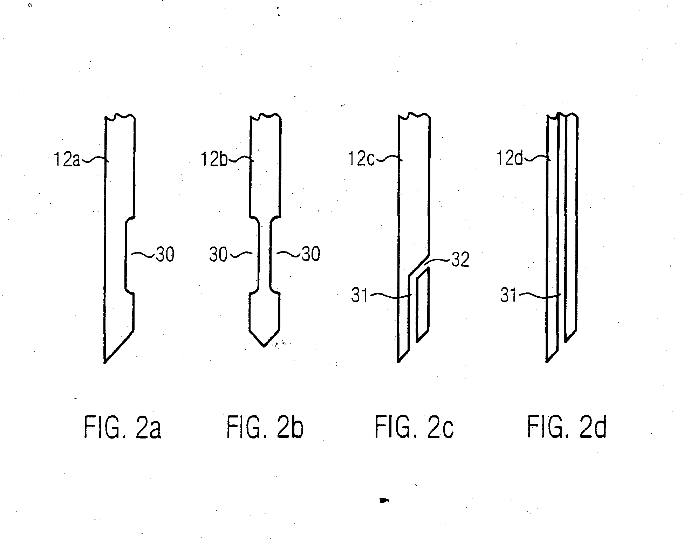

Der Dorn 12 kann auf verschiedenste Weisen ausgeführt werden. Einige Varianten davon sind in Figur 2 dargestellt.

Figur 2 a zeigt einen Dorn 12 a mit einer seitlichen Ausnehmung 30. Wird der Dorn 12 a durch den Schraubverschluss hindurchgestoßen, sodass sich die Ausnehmung 30 im Bereich der Oberseite 25 des Schraubverschlusses 20 befindet, so kann Gas entlang der Ausnehmung 30 durch die von der dickeren Unterseite des Dorns 12 a erzeugten Öffnung in der Oberseite 25 durchtreten.

Es können auch zwei Ausnehmungen oder eine ringförmige Ausnehmung vorgesehen sein, wie dies in Figur 2b dargestellt ist.

Das untere zugespitzte Ende 13 der Dorne 12 a und 12 b kann in der Mitte zulaufend spitz sein, wie dies in Figur 2 b dargestellt ist oder seitlich spitz zulaufend sein, wie dies in Figur 2 a dargestellt ist.

In Figur 2c ist eine Ausführungsform eines Dorns 12 c dargestellt, bei der eine Bohrung 31 zentral in dem unteren Ende des Dorns 12 c angeordnet ist, wobei diese Bohrung 31 mit einem seitlichen Kanal 32 mit der Außenseite des Dorns 12 c verbunden ist.

In Figur 2d ist eine Ausführungsform eines Dorns 12 d dargestellt, in der eine zentrale Bohrung 31 entlang des gesamten Dorns verläuft und am oberen Ende des Dorns 12 d endet. Am oberen Ende der Bohrung 31 kann entweder eine Verbindung zum Atmosphärendruck oder zu einer Druckluftquelle sein.

Eine Vorrichtung 1, wie sie in Figur 1 gezeigt ist, kann an einem Packkopf mehrfach nebeneinander angeordnet sein. Dies ermöglicht die Regeneration von mehreren Flaschen in einem Flaschenkasten gleichzeitig. Die Vorrichtung 1 ist dabei in einem rechteckigen oder wabenförmigen Muster angeordnet.

Der Packkopf kann dabei auch höhenbeweglich sein, um die Vorrichtung 1 auf die Flaschen 21 abzusenken. Dies kann durch einen steuerbaren Manipulator (Roboter etc.) geschehen. Auch kann der Packkopf so ausgestaltet sein, dass er anschließend die gegriffenen Flaschen aus einem Flaschenkasten herausnehmen und an anderer Stelle insgesamt oder teilweise absetzt, z.B. auf ein Förderband.

Auch können einzelne Vorrichtungen 1 des Packkopfs nicht betätigt werden, falls keine Flasche 21 für eine Vorrichtung 1 an dieser Position vorhanden sind.

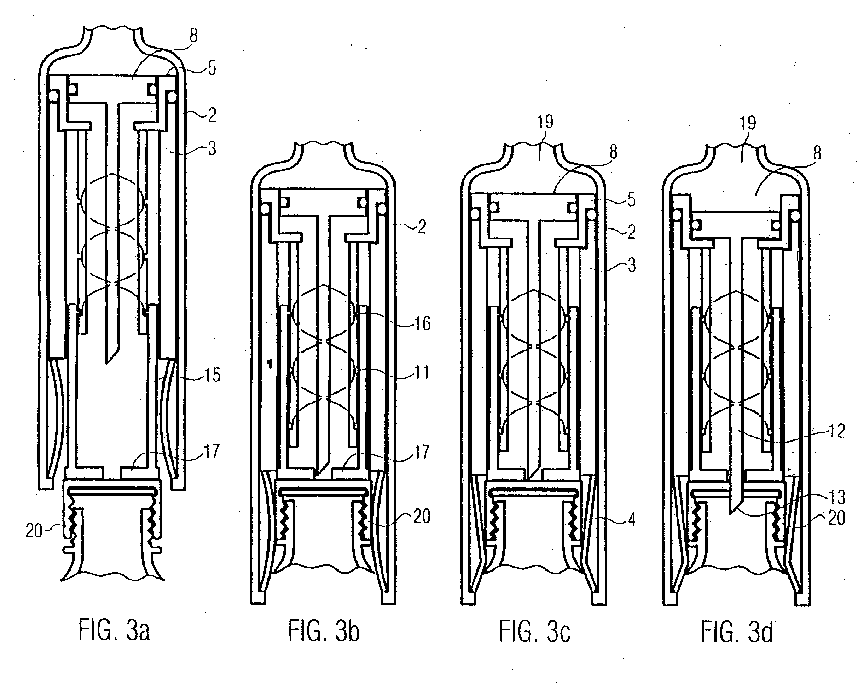

Die Vorgehensweise zum Regenerieren soll anhand von Figur 3 erläutert werden. In Figur 3 a ist der Zustand (Grundstellung) aus Figur 1 gezeigt. Der Zylinder 3, das topfförmige Element 5 und das pneumatische Kolbenelement 8 befinden sich in einer oberen Position (Grundstellung). Das Auflageelement 17 am unteren Ende der Hülse 15 ist in einer unteren Position (Grundstellung). Das Auflageelement 17 ist auf dem Schraubverschluss 20 aufgesetzt. Dies erfolgt durch ein Absenken der Tulpe 2 von oben nach unten auf den Schraubverschluss 20.

In Figur 3b ist dargestellt, wie die Tulpe 2 weiter nach unten abgesenkt wurde. Für das Auflageelement 17 dient der Schraubverschluss 20 dabei als Wiederlager, sodass die Auflagefläche 17 sich nicht weiter zusammen mit der Tulpe 2 absenkt, sondern vielmehr durch die Führung der Zapfen 16 in der Wendelnut 11 entlang einer Schraubenbahn (im Vergleich zu Tulpe 2) in die Tulpe 2 hineingedreht wird. Das Auflageelement 17 nimmt so seine Arbeitsstellung ein. Durch reibschlüssigen Kontakt zwischen dem Auflageelement 17 und dem Schraubverschluss 20 dreht sich der Schraubverschluss und zwar derart, dass er auf die Flasche 21 aufgeschraubt wird. Dadurch ist das Dichtelement 26 im Inneren des Schraubverschlusses 20 ausreichend fixiert.

In Figur 3c ist dargestellt, wie der obere Bereich 19 der Tulpe 2 mit Druckluft beaufschlagt wurde, die beispielsweise durch die obere Öffnung der Tulpe 2 zugeführt wurde. Das topfförmige Element 5 zusammen mit dem Zylinder 3 und dem pneumatischen Kolbenelement 8 bewegen sich in der Tulpe 2 insgesamt nach unten. Durch diese Bewegung des Zylinders 3 in seine Arbeitsstellung wird das elastische Element 4 verformt. Es liegt dabei seitlich an dem Flaschenkopf bzw. dem Flaschenhals an. Der Kopf der Flasche 21 ist somit für das nachfolgende Durchstoßen des Schraubverschlusses 20 ausreichend fixiert. Bei diesem Schritt wird auch die Hülse 9 etwas nach unten bewegt. Dies kann beispielsweise dadurch ausgeglichen werden, dass sich die Hülse 15 etwas weiter auf die Hülse 9 aufdreht (s. Fig. 3c) oder dadurch, dass die Tulpe 2 etwas nach oben geschoben wird. In Fig. 3c ist daher der Zapfen 16 etwas aus der Wendelnut 11 herausbewegt dargestellt, er befindet sich jedoch in der Wendelnut 11, nur etwas aus der Zeichenebene herausgedreht. Diese Bewegung kann ein weitergehendes Festziehen des Verschlusses bewirken.

In Figur 3 d ist dargestellt, wie das pneumatische Kolbenelement 8 durch oberseitige Druckbeaufschlagung ebenfalls abgesenkt ist, so dass es seine untere Arbeitsstellung erreicht. Der an dem pneumatischen Kolbenelement 8 angeordnete Dorn 12 durchstößt dabei mit seiner Spitze 13 den Schraubverschluss 20. Dadurch wird im Schraubverschluss 20 eine Öffnung geschaffen, durch die Luft in die Flasche 21 eingesaugt werden kann, sodass diese regeneriert wird, d.h. sich in ihre ursprüngliche Form zurückstellt.

Bei einer Ausführungsform des Dorns 12, wie in Figur 2d, kann das obere Ende der Bohrung 31 auch in dem Bereich 19 enden, sodass unmittelbar Druckluft aus dem Bereich 19 in das Flascheninnere geblasen wird. Eine Bohrung 31 in dem Dorn 12 kann aber auch an eine separate Druckluftleitung angeschlossen sein, was den Vorteil hat, dass vor dem Durchstechen des Schraubverschlusses 20 keine Druckluft verloren geht.

Bei dem Verfahren, wie es in Figur 3 dargestellt ist, ist es vorteilhaft, dass das Greifen des Flaschenkopfes vor dem Durchstoßen des Schraubverschlusses 20 erfolgt, da somit die Kraft, die der Dorn während des Durchstoßens auf den Schraubverschluss 20 ausübt, unmittelbar durch das Greifen des Flaschenkopfes aufgefangen wird. Andernfalls könnte es passieren, dass die Flasche 21 durch die Kraft auf den Schraubverschluss 20 zusammengedrückt oder dass die Tulpe 2 nach oben gedrückt wird. Je nach Flaschentyp und Schraubverschluss kann jedoch ein Durchstoßen auch ohne ein vorheriges Greifen erfolgen.

Nach der Regeneration der Flaschen können diese an der Tulpe 2 hängend aus einem Flaschenkasten herausbefördert werden. Zum Absetzen der Flasche wird der Druck aus dem Bereich 19 abgelassen, so dass alle beweglichen Teile in ihre Grundstellung (Fig. 1) zurückkehren und die Flasche 21 so ausgestoßen wird. Die Flasche 21 wird dabei durch das Auflageelement 17 aus der Tulpe 2 herausgedrückt. Nach dem Regenerieren kann das Entnehmen der Flaschen im Prinzip auch von einem anderen Packer erfolgen. Dazu würde die Flasche 21 in den selben Kasten ausgestoßen oder belassen, in dem sie regeneriert wurde.

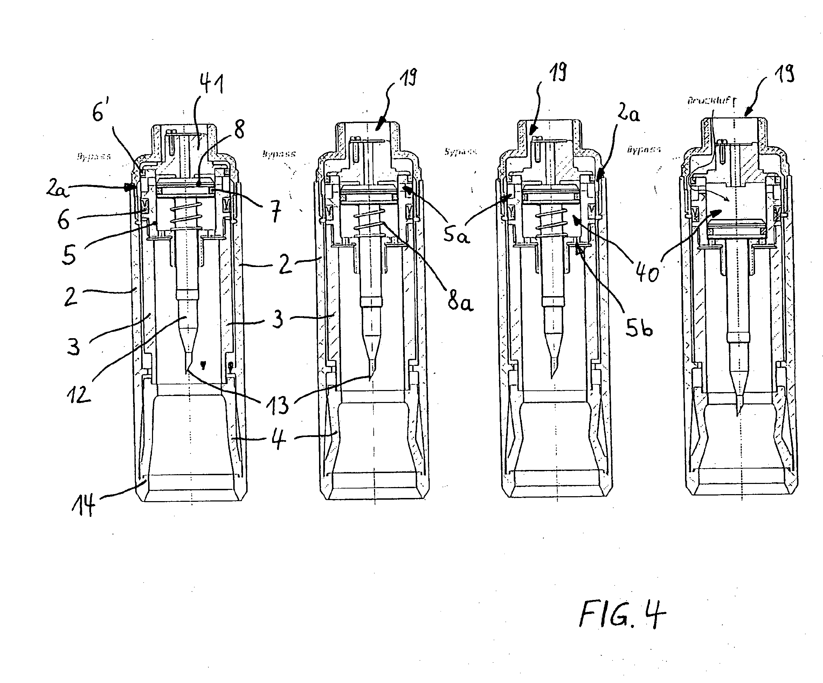

Fig. 4 zeigt eine erfindungsgemäßen Ausführungsform ohne eine integrierte Drehvorrichtung zum Verschrauben von Drehverschlüssen in vier zeitlich nacheinander versetzt gezeigten Betriebsstellungen, ausgehend von links nach rechts. Alle zur vorhergehend beschriebenen Ausführungsform funktionsgleichen Bauteile sind mit identischen Bezugszeichen versehen und werden insoweit nicht nochmals im Detail erläutert.

Der augenfälligste und für die Funktion wesentliche Unterschied liegt darin, dass die Oberseite des koaxial im topfförmigen Element 5 verschiebbar geführten Kolbenelements 8 nicht mehr unmittelbar vom gemeinsamen Druckraum 19 aus pneumatisch beaufschlagbar ist, sondern nur noch in einer bestimmten Axialposition des Elements 5 in der Tulpe 2, wenn eine Bypassverbindung zwischen dem Druckbereich 19 und einem Raum 40 oberhalb der Oberseite des Kolbenelements 8 offensteht. Der Raum 40 entsteht durch einen auf den oberen Rand des topfförmigen Elements 5 gasdicht befestigten Stopfen 41, der einen oberen Endanschlag für das Kolbenelement 8 bildet, gegen das dieses im drucklosen Zustand von einer Druckfeder 8a gedrückt wird.

Das topfförmige Element 5 besitzt zwei in axialer Richtung versetzt angeordnete umfängliche Dichtungen 6, 6' und eine dazwischen angeordnete Ringnut 5a mit radial in den Raum 40 einmündenden Überströmbohrungen. Bei der ganz links in Figur 4 dargestellten Ausgangsstellung, in der das Element 5 sich in einer oberen Anschlagposition befindet, ist eine an der Innenfläche der Tulpe 2 eingeformte Umfangsrille 2a der Ringnut 5a in etwa höhengleich zugeordnet und ist von den beiden Dichtungen 6, 6' sowohl oberhalb als auch unterhalb ihrer beiden Umfangsränder abgedichtet, d.h. es besteht keine Verbindung zum darüber liegenden Druckraum 19.

Wird nun über ein nicht gezeigtes elektropneumatisches Steuerventil der Druckraum 19 mit einem Druckluftspeicher gekoppelt, wodurch sich über dem Stopfen 41 und dem Element 5 ein Überdruck aufbaut, setzt eine nach unten gerichtete axiale Verlagerung dieser Bauteile gegen den federelastischen Widerstand des Gummielements 4 ein, das dabei radial einwärts gerichtet verformt wird. Diese Situation ist in den beiden mittleren Abbildungen erkennbar, wo noch keine Relativverschiebung des Kolbenelements 8 zum Element 5 stattgefunden hat und wegen der oberen Dichtung 6' noch keine Druckluft in die Umfangsrille 2a eingeströmt ist.

Sobald jedoch die Abwärtsverlagerung des Elements 5 in der Tulpe 2 soweit fortgeschritten ist, dass die obere Dichtung 6' unterhalb des oberen Umfangsrandes der Umfangsrille 2a zu liegen kommt, besteht eine offene Bypassverbindung für die Druckluft aus dem eine Anschlussleitung bildenden Druckraum 19 bis in den Raum 40, d.h. entsprechend der ganz rechts gezeigten Abbildung gelangt die Druckluft aus dem Druckraum 19 seitlich am Stopfen 41 vorbei in die Umfangsrille 2a in der Tulpe 2, kann von dort unter Umgehung der Dichtung 6' in die Ringnut 5a strömen, um dann in den über der Oberseite des Kolbenelements 8 liegenden Teil des Raumes 40 zu gelangen. Das im Element 5 abgedichtet geführte Kolbenelement 8 wird dann gegen die Federkraft der Druckfeder 8a relativ zum Element 5 nach unten verschoben, bis das Kolbenelement 8 an der vom Topfboden des Elements 5 gebildeten Anschlagfläche zur Anlage kommt und von der Druckluft bis zu einer späteren Entlastung in dieser Stellung festgehalten wird. Durch Entlüftungsbohrungen 5b im Topfboden kann die Luft aus dem unteren Teil des Raumes 40 in die Atmosphäre verdrängt werden. Nach dem Durchstechen eines Verschlusses durch das spitze Ende 13 des Dornes 12 kann Druckluft aus dem Raum 40 in eine deformierte Flasche einströmen.

Bei einer späteren Druckentlastung im Druckraum 19 stellt sich durch die elastischen Federelemente ein umgekehrter Bewegungsablauf ein, bis schließlich wieder die ursprüngliche Ausgangsstellung entsprechend der linken Darstellung in Fig. 4 erreicht worden ist.

Vorteilhafterweise genügt hierfür wegen der einfachen, selbsttätig arbeitenden Folgesteuerung über den genannten Bypass eine einzige Druckluftanschlussleitung pro Organ, wie sie bei herkömmlichen Packtulpen bereits zur Verfügung steht. Es sind auch keine weiteren Steuerventile erforderlich.

## Patentansprüche

1. Vorrichtung zum Regenerieren von Flaschen (21), die einen Schraubverschluss (20) aufweisen, mit einem Dorn (12), der den Schraubverschluss (20) durchstoßen und einen Gaseinlass in die Flasche (21) ermöglichen kann, sowie mit einem Greifer (3, 4, 5), der eine Flasche (21) greifen kann, wobei der Greifer (3, 4, 5) ein elastisches Greiferelement (4) umfasst, das an die Seiten einer Flasche (21) bzw. eines Flaschenkopfs angelegt werden kann,
**dadurch gekennzeichnet, dass**
der Dorn (12) innerhalb eines verschiebbaren Greiferkolbens (3, 5) angeordnet ist, und der Greiferkolben (3,5) das Greiferelement (4) verformen kann um die Flasche (21) zu greifen,
zur Betätigung des Dorns (12) ein Dornkolben (8) vorgesehen ist, der vorzugsweise innerhalb des verschiebbaren Greiferkolbens (3, 5) für das Greiferelement (4) angeordnet ist;
der Dornkolben (8) und der Greiferkolben (5, 3) pneumatischen Kolben sind, die durch einen selben Druckbereich (19) betätigt werden können; und
der Dornkolben (8) innerhalb einer zentralen Öffnung des Greiferkolbens (3, 5) angeordnet ist und diesem gegenüber beweglich und abgedichtet ist, wobei die den Dornkolben (8) aufnehmende Öffnung des Greiferkolbens für den Dornkolben einen zum Druckbereich (19) hin abgeschlossenen Innenraum bildet, der in Abhängigkeit der Relativstellung des Greiferkolbens zum Druckbereich (19) bzw. zu einer den Druckbereich umschließenden Tulpe (2) selbsttätig gesteuert über einen Bypasskanal mit dem Druckbereich (19) verbindbar und/oder von diesem abtrennbar ist.

2. Vorrichtung nach Anspruch 1, **gekennzeichnet durch** eine Verschraubeinrichtung (9, 11, 15, 16, 17) zum Aufschrauben des Schraubverschlusses (20) auf die Flasche (21), wobei die Verschraubeinrichtung (9, 11, 15, 16, 17) vorzugsweise ein Auflageelement (17) umfasst, das auf der Oberseite (25) des Schraubverschlusses (20) aufgesetzt und auf einer Schraubenbahn (10a, 10b) bewegt werden kann.

3. Vorrichtung nach Anspruch 2, **dadurch gekennzeichnet, dass** das Auflageelement (17) ringförmig ist.

4. Vorrichtung nach einem der Ansprüche 2 oder 3, **dadurch gekennzeichnet, dass** die Vorrichtung so ausgebildet ist, dass das Auflageelement (17) bei Bewegung entlang der Schraubenbahn (10a, 10b) um seine Symmetrieachse rotiert.

5. Vorrichtung nach einem der Ansprüche 2 bis 4, **dadurch gekennzeichnet, dass** die Schraubenbahn (10a, 10b) des Auflageelements (17) durch eine Wendelnut (11) gegeben ist.

6. Vorrichtung nach einem der Ansprüche 2 bis 5, **dadurch gekennzeichnet, dass** das Auflageelement (17) in einer Grundstellung am unteren Ende einer umgebenden Tulpe (2) angeordnet ist.

7. Vorrichtung nach Anspruch 6, **dadurch gekennzeichnet, dass** das **Auflageelement** (17) sich in einer Arbeitsstellung in die Tulpe (2) hineinversetzt befindet, wobei die Vorrichtung so ausgebildet ist, dass sich das Auflageelement (17) auf dem Weg zwischen Grund- und Arbeitsstellung entlang der Schraubenbahn (10a, 10b) bewegt.

8. Vorrichtung nach Anspruch 7, **dadurch gekennzeichnet, dass** das Auflageelement (17) in Richtung der Grundstellung durch eine Feder oder ein sonstiges elastisches Element vorgespannt ist, und durch Druck in Richtung der Arbeitsstellung entlang der Schraubenbahn in die Arbeitsstellung gebracht werden kann.

9. Vorrichtung nach Anspruch 2, **dadurch gekennzeichnet, dass** die Verschraubeinrichtung innerhalb des verschiebbaren Greiferkolbens und/oder des Greiferelements angeordnet ist.

10. Vorrichtung nach einem der Ansprüche 2 bis 9, **dadurch gekennzeichnet, dass** zur Betätigung des Dorns ein Dornkolben (8) vorgesehen ist, der innerhalb der Verschraubeinrichtung angeordnet ist.

11. Vorrichtung nach einem der Ansprüche 1 bis 10, **dadurch gekennzeichnet, dass** der Greifer (3, 4, 5) und der Dorn (12) in einer gemeinsamen Tulpe (2) angeordnet sind.

12. Vorrichtung nach einem der Ansprüche 2 bis 10, **dadurch gekennzeichnet, dass** der Greifer (3, 4, 5), der Dorn (12) und die Verschraubeinrichtung (9, 11, 15, 16, 1) in einer gemeinsamen Tulpe (2) angeordnet sind.

13. Vorrichtung nach Anspruch 11 oder 12, **dadurch gekennzeichnet, dass** im oberen Bereich der gemeinsamen Tulpe (2) ein Druckbereich (19) für die Betätigung der pneumatischen Kolben (3, 5, 8) vorgesehen ist.

14. Vorrichtung nach einem der Ansprüche 1 bis 13, **dadurch gekennzeichnet, dass** der Dorn (12) einen Gaseinlass aus der Atmosphäre in die Flasche (21) ermöglicht.

15. Vorrichtung nach einem der Ansprüche 1 bis 14, **dadurch gekennzeichnet, dass** der Dorn (12) mit einer Drucklufteinrichtung verbunden ist, so dass Druckluft in die Flasche (21) gegeben werden kann.

16. Verfahren zum Regenerieren von einer Flasche (21), die einen Schraubverschluss (20) aufweist, mit den Schritten:
- Greifen der Flasche mit einem Greifer (3, 4, 5), wobei zum Greifen der Flasche (21) ein elastisches Greiferelement (4), wie etwa ein Gummiring oder ein Federelement, in eine Position seitlich des Flaschenkopfes gebracht wird und dort so verformt wird, dass der Flaschenkopf gegriffen wird,
- Durchstoßen des Schraubverschlusses (20) mit einem Dorn (12), wobei der Dorn (12) einen Gaseinlass in die Flasche (21) ermöglicht, sowie
- ein optionales Aufschrauben des Schraubverschlusses (20) auf die Flasche (21) mit einer Verschraubeinrichtung (9, 11, 15, 16, 17) noch vor dem Durchstoßen des Schraubverschlusses,
**dadurch gekennzeichnet, dass**
der Dorn (12) innerhalb eines verschiebbaren Greiferkolbens (3,5) angeordnet ist, und der Greiferkolben (3,5) das Greiferelement (4) verformen kann um die Flasche (21) zu greifen ; und
der Dorn (12) durch einen Kolben (8), wie etwa einen pneumatischen Kolben, betätigt wird; und
der Kolben (8) des Dorns (12) und der Kolben (3, 5) des elastischen Elements (4) durch den Druck in demselben Druckbereich (19) betätigt werden, wobei der Kolben (8) des Dorns (12) selbsttätig gesteuert in Abhängigkeit der Stellung des Kolbens (3, 5) des elastischen Elements (4) über eine Bypassverbindung vom Druckbereich (19) beaufschlagbar ist.

17. Verfahren nach Anspruch 16, **dadurch gekennzeichnet, dass** die Verschraubeinrichtung (9, 11, 15, 16, 17) und/oder der Greifer (3, 4, 5) und/oder der Dorn (12) in einer Tulpe (2) angeordnet sind.

18. Verfahren nach einem der Ansprüche 16 oder 17, **dadurch gekennzeichnet,**
- **dass** die Verschraubeinrichtung (9, 11, 15, 16, 17) auf die Flasche (21) zubewegt wird,
wobei ein Auflageelement (17) auf den Schraubverschluss (20) aufgesetzt wird,
- **dass** die Verschraubeinrichtung (9, 11, 15, 16, 17) beim Aufsetzen des Auflageelements (17) auf den Schraubverschluss (20) weiter auf die Flasche (21) zubewegt wird,
wobei durch die Kraft, die die Flasche (21) auf das Auflageelement (17) ausübt, das Auflageelement (17) gegenüber der Vorrichtung (1) entlang einer Schraubenbahn (10a, 10b) geführt wird, so dass der Schraubverschluss (20) auf die Flasche (21) aufgeschraubt wird.

19. Verfahren nach Anspruch 18, **dadurch gekennzeichnet, dass** das Auflageelement (17) entlang einer Wendelnut (11) geführt wird, die die Schraubenbahn (10a, 10b) vorgibt

20. Verfahren nach einem der Ansprüche 16 bis 19, **dadurch gekennzeichnet, dass** der Schraubverschluss (20) mindestens eine, vorteilhafterweise mindestens eineinviertel, noch vorteilhafterweise mindestens eineinhalb und noch vorteilhafterweise mindestens zwei Umdrehungen aufgeschraubt wird.

21. Verfahren nach einem der Ansprüche 16 bis 20, **dadurch gekennzeichnet, dass** zur Verformung des elastischen Greiferelements (4) ein pneumatischer Kolben (3, 5), betätigt wird, der das elastische Greiferelement (4) zusammendrückt.

## Claims

1. Device for regenerating bottles (21) which comprise a screw cap (20), the device comprising a spike (12) which can pierce the screw cap (20) and provide a gas inlet into the bottle (21), and a gripper (3, 4, 5) which can grip a bottle (21), the gripper (3, 4, 5) including an elastic gripper element (4) which can be placed on the sides of a bottle (21) or a bottle head,
**characterized in that**
the spike (12) is arranged within a displaceable gripper piston (3, 5), and the gripper piston (3, 5) can deform the gripper element (4) to grip the bottle (21),
a spike piston (8) is provided for operating the spike (12), the spike piston (8) being preferably arranged within the displaceable gripper piston (3, 5) for the gripper element (4),
the spike piston (8) and the gripper piston (5, 3) are pneumatic pistons which can be operated by the same pressure area (19), and
the spike piston (8) is arranged within a central opening of the gripper piston (3, 5) and is movable and sealed relative thereto, wherein the opening of the gripper piston which receives the spike piston (8) forms, for the spike piston, an interior which is closed relative to the pressure area (19) and which in response to the relative position of the gripper piston with respect to the pressure area (19) or a tulip-shaped part (2) enclosing the pressure area is connectacle in an automatically controlled manner via a bypass channel to the pressure area (19) and/or is separable therefrom.

2. Device according to claim 1, **characterized by** a screwing device (9, 11, 15, 16, 17) for screwing the screw cap (20) onto the bottle (21), wherein the screwing device (9, 11, 15, 16, 17) preferably includes a support element (17) which can be mounted on the top side (25) of the screw cap (20) and moved along a helical path (10, 10a).

3. Device according to claim 2, **characterized in that** the support element (17) is annular.

4. Device according to any one of claims 2 or 3, **characterized in that** the device is configured such that upon movement along the helical path (10a, 10b) the support element (17) rotates about its axis of symmetry.

5. Device according to any one of claims 2 to 4, **characterized in that** the helical path (10a, 10b) of the support element (17) is defined by a spiral groove (11).

6. Device according to any one of claims 2 to 5, **characterized in that** the support element (17) is arranged in a basic position on the lower end of a surrounding tulip-shaped part (2).

7. Device according to claim 6, **characterized in that** the support element (17) is positioned in an operative position such that it is placed in the tulip-shaped part (2), wherein the device is configured such that the support element (17) on its way between basic position and operative position moves along the helical path (10a, 10b).

8. Device according to claim 7, **characterized in that** the support element (17) is tensioned in the direction of the basic position by a spring or another elastic element and can be moved by pressure in the direction of the operative position along the helical path into the operative position.

9. Device according to claim 2, **characterized in that** the screwing device is arranged within the displaceable gripper piston and/or the gripper element.

10. Device according to any one of claims 2 to 9, **characterized in that** a spike piston (8) which is arranged within the screwing device is provided for operating the spike.

11. Device according to any one of claims 1 to 10, **characterized in that** the gripper (3, 4, 5) and the spike (12) are arranged in a joint tulip-shaped part (2).

12. Device according to any one of claims 2 to 10, **characterized in that** the gripper (3, 4, 5), the spike (12) and the screwing device (9, 11, 15, 16, 17) are arranged in a joint tulip-shaped part (2).

13. Device according to claim 11 or 12, **characterized in that** in the upper area of the joint tulip-shaped part (2) a pressure area (19) is provided for operating the pneumatic pistons (3, 5, 8).

14. Device according to any one of claims 1 to 13, **characterized in that** the spike (12) provides a gas inlet from the atmosphere into the bottle (21).

15. Device according to any one of claims 1 to 14, **characterized in that** the spike (12) is connected to a compressed-air device, so that compressed air can be passed into the bottle (21).

16. Method for regenerating a bottle (21) which comprises a screw cap (20), comprising the steps of:
- gripping the bottle with a gripper (3, 4, 5), wherein for gripping the bottle (21) an elastic gripper element (4), such as a rubber ring or a spring element, is moved into a position at the side of the bottle head and is there deformed such that the bottle head is gripped,
- piercing the screw cap (20) with a spike (12), wherein the spike (12) provides a gas inlet into the bottle (21), and
- optionally screwing the screw cap (20) onto the bottle (21) with a screwing device (9, 11, 15, 16, 17) even before the screw cap is pierced,
**characterized in that**
the spike (12) is arranged within a displaceable gripper piston (3, 5), and the gripper piston (3, 5) can deform the gripper element (4) to grip the bottle (21), and
the spike (12) is operated by a piston (8), such as a pneumatic piston, and
the piston (8) of the spike (12) and the piston (3, 5) of the elastic element (4) are operated by the pressure in the same pressure area (19), wherein the piston (8) of the spike (12) can be actuated in automatically controlled fashion in response to the position of the piston (3, 5) of the elastic element (4) via a bypass connection by the pressure area (19).

17. Method according to claim 16, **characterized in that** the screwing device (9, 11, 15, 16, 17) and/or the gripper (3, 4, 5) and/or the spike (12) are arranged in a tulip-shaped part (2).

18. Method according to any one of claims 16 or 17, **characterized in**
- **that** the screwing device (9, 11, 15, 16, 17) is moved towards the bottle (21),
wherein a support element (17) is mounted on the screw cap (20),
- **that** the screwing device (9, 11, 15, 16, 17) upon placement of the support element (17) on the screw cap (20) is moved further towards the bottle (21),
wherein by the force exerted by the bottle (21) on the support element (17), the support element (17) is guided with respect to the device (1) along a helical path (10a, 10b), so that the screw cap (20) is screwed onto the bottle (21).

19. Method according to claim 18, **characterized in that** the support element (17) is guided along a spiral groove (11) which defines the helical path (10a, 10b).

20. Method according to any one of claims 16 to 19, **characterized in that** the screw cap (20) is screwed on by at least one, advantageously at least one and a quarter, even more advantageously at least one and a half and even more advantageously at least two turns.

21. Method according to any one of claims 16 to 20, **characterized in that** a pneumatic piston (3, 5) which compresses the elastic gripper element (4) is operated for deforming the elastic gripper element (4).

## Revendications

1. Dispositif pour la régénération de bouteilles (21) qui comportent un bouchon de fermeture à vis (20), le dispositif comprenant une broche de poinçonnage (12), qui est en mesure de transpercer le bouchon de fermeture à vis (20) et de permettre une entrée de gaz à l'intérieur de la bouteille (21), ainsi qu'un préhenseur (3, 4, 5) qui peut saisir une bouteille (21), le préhenseur (3, 4, 5) comportant un élément de préhenseur élastique (4), qui peut être appliqué sur les côtés d'une bouteille (21) ou d'une tête de bouteille,
**caractérisé en ce que**
la broche de poinçonnage (12) est agencée à l'intérieur d'un piston de préhenseur (3, 5) susceptible de coulisser, et le piston de préhenseur (3, 5) peut déformer l'élément de préhenseur (4) pour saisir la bouteille (21) ;
pour l'actionnement de la broche de poinçonnage (12), il est prévu un piston de broche de poinçonnage (8) qui, de préférence, est agencé à l'intérieur du piston de préhenseur (3, 5) coulissant pour l'élément de préhenseur (4) ;
le piston de broche de poinçonnage (8) et le piston de préhenseur (3, 5) sont des pistons pneumatiques, qui peuvent être actionnés par une même zone de pression (19) ; et
le piston de broche de poinçonnage (8) est agencé à l'intérieur d'une ouverture centrale du piston de préhenseur (3, 5) et est mobile et rendu étanche par rapport à celui-ci, l'ouverture du piston de préhenseur, qui accueille le piston de broche de poinçonnage (8), formant pour le piston de broche de poinçonnage un espace intérieur fermé en direction de la zone de pression (19), qui peut être relié par un canal de dérivation à la zone de pression (19) et/ou être isolé de celle-ci, en étant commandé de manière automatique en fonction de la position relative du piston de préhenseur par rapport à la zone de pression (19), respectivement par rapport une tulipe (2) entourant la zone de pression.

2. Dispositif selon la revendication 1, **caractérisé par** un dispositif de vissage (9, 11, 15, 16, 17) pour visser le bouchon de fermeture à vis (20) sur la bouteille (21), le dispositif de vissage (9, 11, 15, 16, 17) comprenant de préférence un élément d'appui (17), qui peut être appliqué sur le côté supérieur (25) du bouchon de fermeture à vis (20) et être déplacé sur une voie hélicoïdale (10a, 10b).

3. Dispositif selon la revendication 2, **caractérisé en ce que** l'élément d'appui (17) est de forme annulaire.

4. Dispositif selon l'une des revendications 2 ou 3, **caractérisé en ce que** le dispositif est conçu de manière à ce que l'élément d'appui (17), lors du mouvement le long de la voie hélicoïdale (10a, 10b), tourne autour de son axe de symétrie.

5. Dispositif selon l'une des revendications 2 à 4, **caractérisé en ce que** la voie hélicoïdale (10a, 10b) de l'élément d'appui (17) est réalisée par une rainure en hélice (11) .

6. Dispositif selon l'une des revendications 2 à 5, **caractérisé en ce que** l'élément d'appui (17) est, dans une position de base, agencé à l'extrémité inférieure d'une tulipe (2) qui l'entoure.

7. Dispositif selon la revendication 6, **caractérisé en ce que** l'élément d'appui (17) se trouve, dans une position de travail, déplacé à l'intérieur de la tulipe (2), le dispositif étant conçu de manière à ce que l'élément d'appui (17) se déplace le long de la voie hélicoïdale (10a, 10b), sur le parcours entre la position de base et la position de travail.

8. Dispositif selon la revendication 7, **caractérisé en ce que** l'élément d'appui (17) est précontraint en direction de la position de base, par un ressort ou un autre élément élastique, et peut être amené dans la position de travail, sous l'effet de la pression en direction de la position de travail, le long de la voie hélicoïdale.

9. Dispositif selon la revendication 2, **caractérisé en ce que** le dispositif de vissage est agencé à l'intérieur du piston de préhenseur coulissant et/ou de l'élément de préhenseur.

10. Dispositif selon l'une des revendications 2 à 9, **caractérisé en ce que** pour actionner la broche de poinçonnage, il est prévu un piston de broche de poinçonnage (8), qui est agencé à l'intérieur du dispositif de vissage.

11. Dispositif selon l'une des revendications 1 à 10, **caractérisé en ce que** le préhenseur (3, 4, 5) et la broche de poinçonnage (12) sont agencés dans une tulipe (2) commune.

12. Dispositif selon l'une des revendications 2 à 10, **caractérisé en ce que** le préhenseur (3, 4, 5), la broche de poinçonnage (12) et le dispositif de vissage (9, 11, 15, 16, 17) sont agencés dans une tulipe (2) commune.

13. Dispositif selon la revendication 11 ou la revendication 12, **caractérisé en ce que** dans la zone supérieure de la tulipe commune (2) est prévue une zone de pression (19) pour l'actionnement des pistons pneumatiques (3, 5, 8).

14. Dispositif selon l'une des revendications 1 à 13, **caractérisé en ce que** la broche de poinçonnage (12) permet une entrée de gaz dans la bouteille (21) à partir de l'atmosphère.

15. Dispositif selon l'une des revendications 1 à 14, **caractérisé en ce que** la broche de poinçonnage (12) est reliée à un dispositif à air comprimé, de sorte qu'il est possible d'envoyer de l'air comprimé dans la bouteille (21).

16. Procédé pour la régénération d'une bouteille (21) qui comporte un bouchon de fermeture à vis (20), comprenant les étapes suivantes :
- la saisie de la bouteille avec un préhenseur (3, 4, 5), un élément de préhenseur (4) élastique, comme par exemple un anneau en caoutchouc ou un élément de ressort, étant amené dans une position latérale de la tête de bouteille pour la saisie de la bouteille (21), et y est déformé de manière telle que la tête de bouteille soit saisie,
- le transpercement du bouchon de fermeture à vis (20) à l'aide d'une broche de poinçonnage (12), la broche de poinçonnage (12) permettant une entrée de gaz dans la bouteille (21), ainsi que
- un vissage optionnel du bouchon de fermeture à vis (20) sur la bouteille (21) à l'aide d'un dispositif de vissage (9, 11, 15, 16, 17) avant le transpercement du bouchon de fermeture à vis,
**caractérisé en ce que**
la broche de poinçonnage (12) est agencée à l'intérieur d'un piston de préhenseur (3, 5) susceptible de coulisser, et le piston de préhenseur (3, 5) peut déformer l'élément de préhenseur (4) pour saisir la bouteille (21) ; et
la broche de poinçonnage (12) est actionnée par un piston (8), comme par exemple un piston pneumatique ; et le piston (8) de la broche de poinçonnage (12) et le piston (3, 5) de l'élément élastique (4) sont actionnés par la pression dans la même zone de pression (19), le piston (8) de la broche de poinçonnage (12) pouvant être alimenté à partir de la zone de pression (19) par l'intermédiaire d'une liaison de dérivation en étant commandé automatiquement en fonction de la position relative du piston (3, 5) de l'élément élastique (4).

17. Procédé selon la revendication 16, **caractérisé en ce que** le dispositif de vissage (9, 11, 15, 16, 17) et/ou le préhenseur (3, 4, 5) et/ou la broche de poinçonnage (12) sont agencés dans une tulipe (2).

18. Procédé selon l'une des revendications 16 ou 17, **caractérisé**
- **en ce que** le dispositif de vissage (9, 11, 15, 16, 17) est déplacé en direction et sur la bouteille (21),
un élément d'appui (17) étant appliqué sur le bouchon de fermeture à vis (20),
- **en ce que** le dispositif de vissage (9, 11, 15, 16, 17), lors de la venue en appui de l'élément d'appui (17) sur le bouchon de fermeture à vis (20), continue à être déplacé en direction de la bouteille (21),
la force qu'exerce la bouteille (21) sur l'élément d'appui (17), produisant le guidage de l'élément d'appui (17) par rapport au dispositif (1) le long d'une voie hélicoïdale (10a, 10b), de sorte que le bouchon de fermeture à vis (20) est vissé sur la bouteille (21).

19. Procédé selon la revendication 18, **caractérisé en ce que** l'élément d'appui (17) est guidé le long d'une rainure en hélice (11), qui définit la voie hélicoïdale (10a, 10b).

20. Procédé selon l'une des revendications 16 à 19, **caractérisé en ce que** le bouchon de fermeture à vis (20) est vissé selon au moins un tour de rotation, de manière avantageuse selon au moins un tour un quart, de façon encore plus avantageuse selon au moins un tour et demi, et de manière encore plus avantageuse selon au moins deux tours de rotation.

21. Procédé selon l'une des revendications 16 à 20, **caractérisé en ce que** pour déformer l'élément de préhenseur (4) élastique, on actionne un piston pneumatique (3, 5), qui comprime l'élément de préhenseur (4) élastique.
